# EUROPEAN PATENT SPECIFICATION

(11) **EP 0 676 870 B1**
(45) Date of publication and mention of the grant of the patent: **16.10.2002**
(21) Application number: 94113262.3
(22) Date of filing: 25.08.1994
(51) Int. Cl.: H04B 7/08

(54) **Space diversity receiver with antenna selection based on error rate and signal strength**
Raumdiversityempfänger mit auf Bitfehlerrate und Signalstärke basierender Antennenauswahl
Récepteur à diversité d'espace avec sélection d'antenne basé sur le taux d'erreurs et l'intensité de signal

(30) Priority: 08.04.1994 JP 7093994
(43) Date of publication of application: 11.10.1995
(73) Proprietor: MITSUBISHI DENKI KABUSHIKI KAISHA, Tokyo 100 (JP)
(72) Inventor: Shimizu, Masahiro, Mitsubishi Kabushiki Kaisha, Sanda-shi, Hyogo 669-13 (JP)
(74) Representative: Pfenning, Meinig & Partner

(56) References cited:
- US-A- 5 117 236
- PATENT ABSTRACTS OF JAPAN vol. 016 no. 403 (E-1254) ,26 August 1992 & JP-A-04 133587 (MATSUSHITA ELECTRIC IND) 7 May 1992,
- PATENT ABSTRACTS OF JAPAN vol. 9 no. 315 (E-365) ,11 December 1985 & JP-A-60 148236 (PIONEER) 5 August 1985,
- PATENT ABSTRACTS OF JAPAN vol. 15 no. 22 (E-1024) ,18 January 1991 & JP-A-02 268528 (TOYOTA MOTOR) 2 November 1990,
- PATENT ABSTRACTS OF JAPAN vol. 13 no. 410 (E-819) ,11 September 1989 & JP-A-01 149619 (NTT) 12 June 1989,

## Description

### BACKGROUND OF THE INVENTION

### 1. Field of the Invention

This invention relates to a digital information receiver for a vehicle using a diversity antenna system.

### 2. Description of the Related Art

Recently, digital information media such as an FM multiplex broadcasting have been developed and they have become useful information sources of traffic, weather forecast and so forth. Under these circumstances, various types of digital information receivers are being developed.

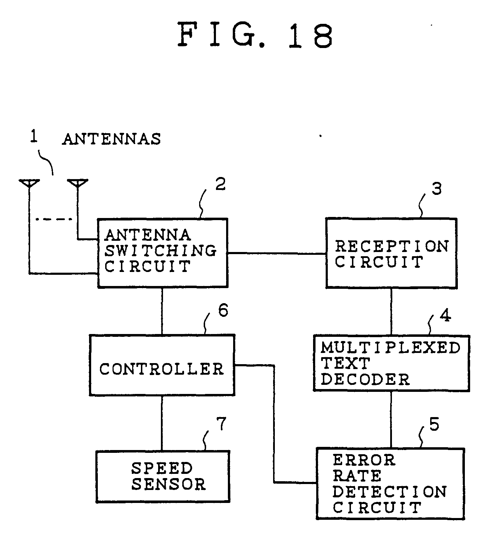

FIG. 18 is a schematic drawing showing a block diagram of the conventional multiplexed text receiver using a diversity antenna system disclosed in Japanese Unexamined Patent Publication HEI 4-133587. In this figure, reference numeral 1 denotes a group of antennas each of which has a different beam pattern, reference numeral 2 denotes an antenna switching circuit which switches antennas of the antenna group 1, reference numeral 3 denotes a reception circuit which performs reception processing such as detection of radio waves received by an antenna switched by the antenna switching circuit 2, reference numeral 4 denotes a multiplexed text decoder which reproduces multiplexed text signals from image signals detected by reception circuit 3, reference numeral 5 denotes an error rate detection circuit which detects an error rate when the multiplexed text signals are reproduced, reference numeral 6 denotes a controller which instructs the antenna switching circuit 2 to select an antenna among antenna group 1, reference numeral 7 denotes a speed sensor which detects a speed of a car in which the receiver is installed. In this diversity antenna system, each time the receiver recognizes stoppage of the car by the speed sensor 7, the controller 6 instructs the antenna switching circuit 2 to switch to an antenna receiving a signal of the lowest error rate among antenna group 1 for the purpose of obtaining multiplexed text data which have low error rate. However, the car moves in the circumstance in which many radio waves, each of which has a different amplitude and a different phase, are superimposed each other. Therefore, it is disadvantageous to select an antenna when the car stops and to use that antenna for receiving signals even after the car begins to move. The above described receiver does not effectively utilizes the antenna diversity because the receiving conditions continuously vary while the car moves.

Another conventional apparatus employs a diversity system in which an antenna receiving a signal of the highest signal strength is selected.

Further, In case antennas are switched depending only on signal strength, the real effect of the diversity antenna is not shown because the receiver does not evaluate quality of received digital information contained in broadcasting waves.

Moreover, antenna switching for following the continuous change of receiving condition may cause diversity noise which makes the receiving condition worse depending on vehicle speed.

The above conventional receivers have the following defects.

First of all, when the receiving condition continuously varies while the vehicle is moving, antenna switching based only on the signal strength has a possibility that an optimal antenna is not necessarily selected because quality of received digital information is not directly evaluated.

Secondly, antenna switching based only on the error rate cannot follow the ever-changing circumstances of the vehicle. Therefore, there is a possibility that when an antenna is selected, the other antenna may be better than the selected antenna.

Finally, antenna switching for following the continuous change of receiving condition may cause diversity noise which makes the receiving condition worse depending on vehicle speed. The prior art document US-A-5117236 discloses an antenna selection technique based on both signal quality and strength at the same time.

### SUMMARY OF THE INVENTION

The present invention is made in order to solve the above problems and accordingly the object of the invention is to obtain a digital information receiver for vehicle capable of selecting an optimal antenna precisely in order to acquire digital information received at a low error rate.

In order to achieve the above object, a digital information receiver of the invention includes a plurality of antennas; an antenna switching circuit which selects one of the antennas according to an external instruction signal; means for performing reception processing to a signal including digital information, received by an antenna selected by the selecting means; means for demodulating the digital information included in the received signal; means for detecting an error rate of the demodulated digital information; means for detecting a signal strength of the received signal; and means for controlling the antenna switching circuit through sending the external instruction signal such that an antenna selection mode is selectively performed between a signal strength based antenna selection mode in which an antenna is selected which receives a signal of the highest signal strength and an error rate based antenna selection mode in which an antenna is selected which receives a signal of the lowest error rate.

The switching from one antenna selection mode to another antenna selection mode is performed based on a speed of the vehicle, an error rate of the received signal, a signal strength of the received signal, or a current position of the vehicle.

Further, the switching from one antenna selection mode to another antenna selection mode is performed such that the more the speed increases, the more rarely the mode is changed. This reduces diversity noise which is caused by switching an antenna too frequently.

### BRIEF DESCRIPTION OF THE DRAWINGS

FIG. 1 is a block diagram showing a structure of a digital information receiver for vehicle as the embodiment 1 of the invention.

FIG. 2 is a flow chart showing general operations of the embodiment 1 of the invention.

FIG. 3 is a flow chart showing detailed operation of the embodiment 1 of the invention.

FIG. 4 is a graph showing a moving speed of vehicle, a signal indicating a diversity mode, signal strengths and error rates of signals received by antennas A, B, and antenna selection carried out in embodiment 1

FIG. 5 is a block diagram showing a structure of digital information receiver as embodiment 2 of the invention.

FIG. 6 is a flow chart of the detailed operations of the embodiment 2.

FIG. 7 is a block diagram showing a structure of a digital information receiver as embodiment 3 of the invention.

FIG. 8 is a flow chart showing the operations of the embodiment 3 of the invention.

FIG. 9 is a block diagram showing a structure of a digital information receiver as embodiment 4 of the invention.

FIG. 10 is a flow chart showing the operations of the embodiment 4 of the invention.

FIG. 11 is a flow chart showing the operations of the embodiment 5 of the invention.

FIG. 12 is a flow chart showing the operations of the embodiment 6 of the invention.

FIG. 13 is a flow chart showing the operations of the embodiment 7 of the invention.

FIG. 14 is a flow chart showing the operations of the embodiment 8 of the invention.

FIG. 15 is a flow chart showing the operations of the embodiment 9 of the invention.

FIG. 16 is a flow chart showing the operations of the embodiment 10 of the invention.

FIG. 17 is a flow chart showing the operations of the embodiment 11 of the invention.

FIG. 18 is a block diagram showing a structure of the conventional receiver.

### DETAILED DESCRIPTION OF THE PREFERRED EMBODIMENTS

The preferred embodiments of the present invention will be explained in detail with reference to the drawings.

### EMBODIMENT 1.

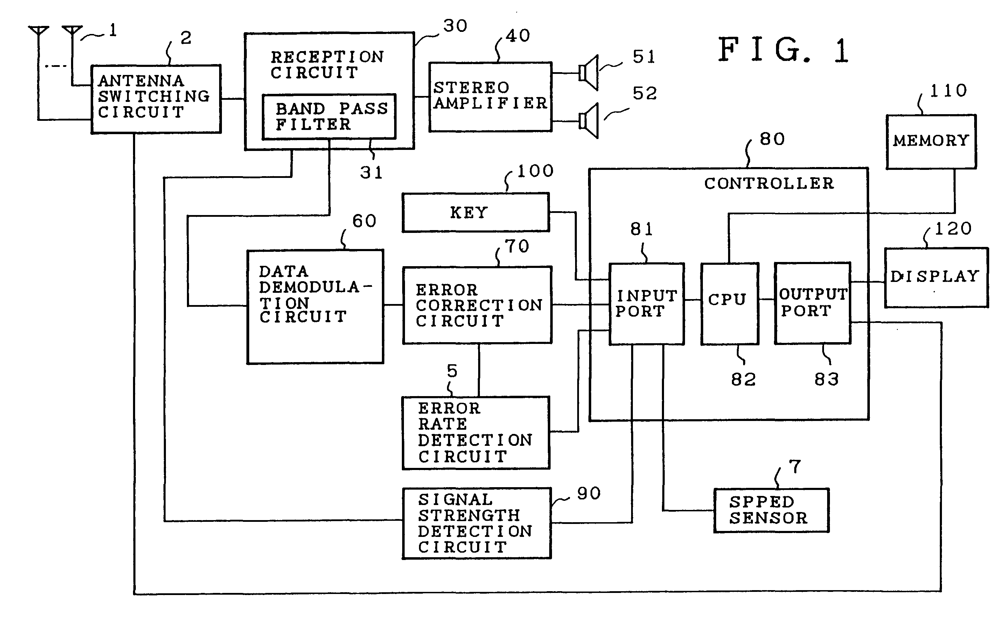

FIG. 1 is a block diagram showing a structure of a digital information receiver for a vehicle as an embodiment of the invention. The same reference numerals are attached to the same or similar portions as those of FIG. 18 and corresponding explanations are omitted.

The reception circuit 30 amplifies and detects radio frequency signals such as FM (Frequency Modulation) mutiplexed text broadcasting signals, which are received by an antenna selected by the antenna switching circuit 2. The reception circuit 30 has the band pass filter 31 which splits the detected signals into an audio signal band and a digital information band. The audio signals are amplified by stereo amplifier 40 and sounds corresponding to the audio signals are outputted from loud speakers 51 and 52. The digital data band signals extracted by the band pass filter 31 are demodulated into digital data by the data demodulation circuit 60. These digital data are inputted to the error correction circuit 70 and an error correction for these data is performed. The error corrected data are inputted to the controller 80. The controller 80 includes the input port 81 for inputting data, the CPU (Central Processing Unit) 82 which performs a predetermined control program and the output port 83 for outputting data. The controller 80 performs control processes for antenna switching.

Based on a result of error correction made by the error correction circuit 70, the error rate detection circuit 5 detects an error rate and this error rate is inputted to the controller 80. The signal strength detection circuit 90 detects an electric field strength based on the radio frequency signals inputted to the reception circuit 30 and the electric field strength is inputted to the input port 81 of the controller 80. The key 100 is connected to input port 81 of the controller 80 for giving an instruction of a receiving frequency selected by a user to the receiver. The speed sensor 7 which detects a speed of the vehicle is also connected to the input port 81 of the controller 80. The memory 110 for storing demodulated digital data and the display 120 for displaying the digital data are connected to the controller 80.

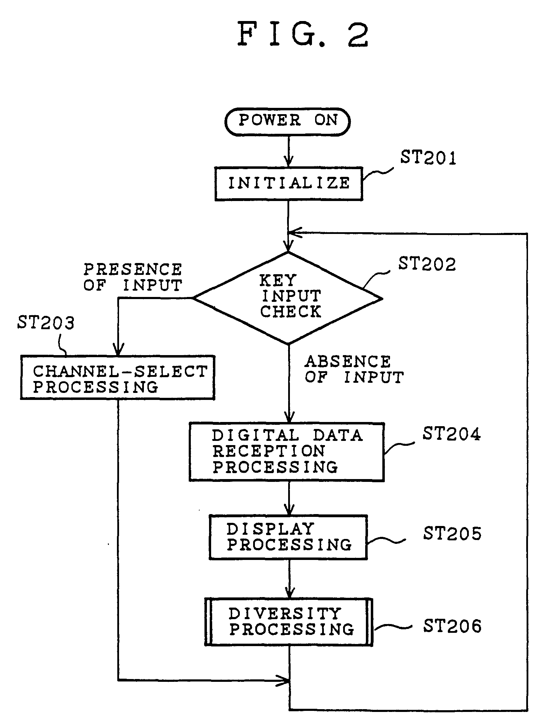

At first, general operation of the above digital information receiver will be explained with reference to the flow chart of FIG. 2. When the power is put on, a series of initialization operations such as setting default receiving frequency is performed at step ST201. At step ST202, whether there is an input to the key 100 or not is checked.

If there is an input to the key 100, necessary procedures corresponding to the input such as a channel selection will be carried out at step ST203. If there is no key input at step ST202, digital data reception processing is carried out at step ST204. The reception-processed data are displayed on the screen of the display 120 at step ST205. After that, an optimal antenna is selected among antenna group 1 by carrying out diversity processing at step ST206. Then the sequence moves to step ST202.

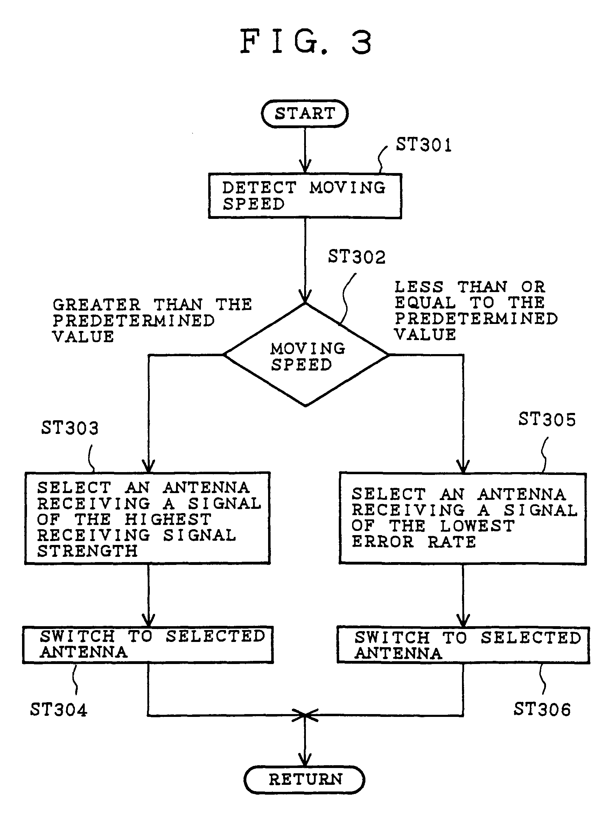

Next, detailed operation of the diversity processing at step ST206 of FIG. 2 will be explained with reference to FIG. 3. The controller 80 detects a moving speed of the vehicle by reading the output of the speed sensor 7 at step ST301. The detected moving speed V is compared with the predetermined value P1 at step ST302. If the detected speed V is greater than the predetermined value P1, an antenna receiving a signal of the highest signal strength is selected based on a signal strength obtained by the signal strength detection circuit 90 at step ST303. The current antenna is switched to the selected antenna at step ST304.

Moving speed V is less than or equal to the predetermined value P1 at step ST302, an antenna receiving a signal of the lowest error rate is selected at ST305. The current antenna is switched to the selected antenna at step ST306.

As shown in FIG.2, this diversity processing is repeated so that an optimal antenna selection may be performed corresponding to a moving speed of the vehicle. Namely, antenna selection is carried out based on a received signal strength when the moving speed V is greater than the predetermined value P1, while antenna selection is carried out based on a received signal error rate when the moving speed V is less than or equal to the predetermined value P1. Because the certain amount of time is necessary for calculating an error rate, when receiving condition varies so much as moving at a high speed, antenna selection based on an error rate is often not appropriate. In this embodiment, when a moving speed of the vehicle is high, antenna selection is carried out based on the received signal strength.

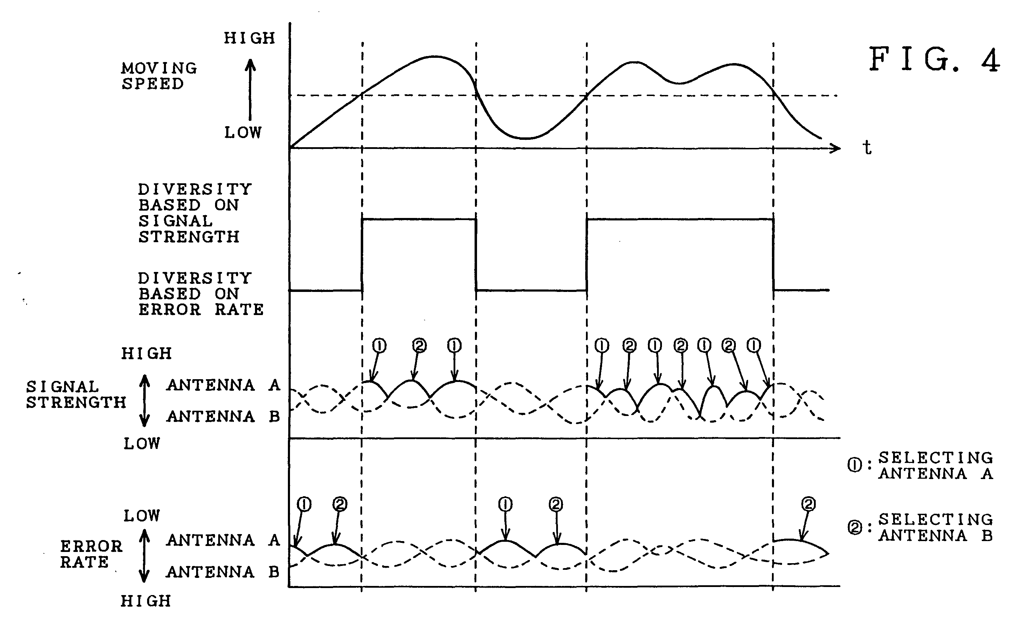

FIG. 4 is a graph showing a moving speed of vehicle, a signal indicating a diversity mode, signal strengths and error rates of signals received by antennas A, B, and antenna selection when the above operations are carried out. As shown in this figure, antenna A or antenna B is selected while a signal strength based diversity mode and an error rate based diversity mode are being switched corresponding to a moving speed of the vehicle.

### EMBODIMENT 2.

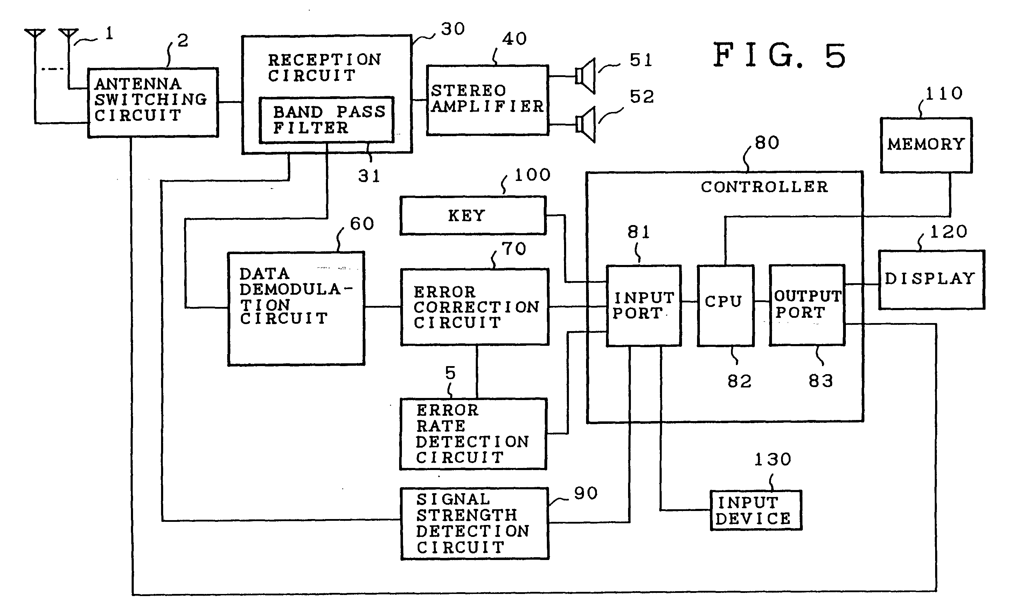

FIG. 5 is a block diagram showing a structure of digital information receiver as another embodiment of the invention. The same reference numerals are attached to the same or similar portions as those of FIG. 1 and corresponding explanations are omitted. To the input port 81 of the controller 80 is connected the input device 130 which inputs an instruction from a user as to which mode is selected between a mode in which an antenna is selected based on a received signal strength and a mode in which an antenna is selected based on an error rate.

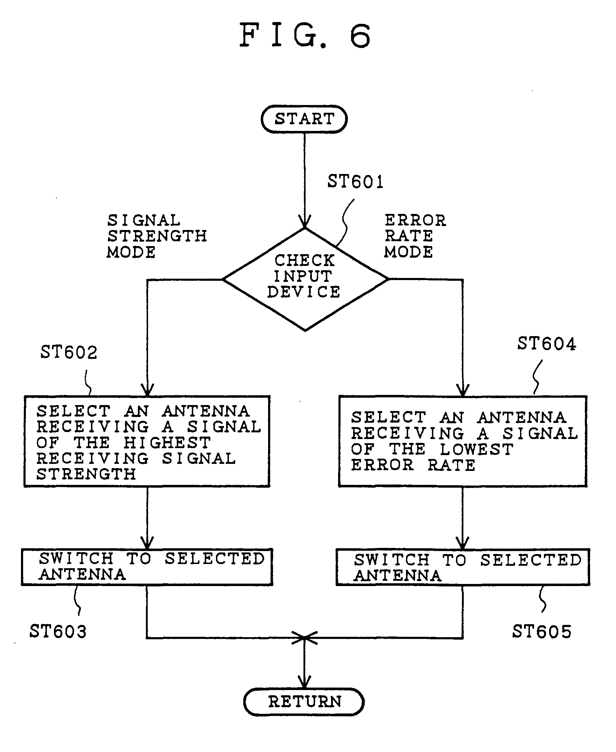

The diversity operation of the above receiver will be explained with reference to the flow chart of FIG. 6. The controller 80 checks whether a signal strength based mode is selected or an error rate based mode is selected at step ST601. If the input device 130 indicates a signal strength based mode, an antenna receiving a signal of the highest signal strength is selected based on the signal strength obtained from the signal strength detection circuit 90 at step ST602 and the current antenna is switched to the selected antenna at step ST603. If the input device 130 indicates an error rate based mode, an antenna receiving a signal of the lowest error rate is selected at step ST604 and the current antenna is switched to the selected antenna at step ST605. Therefore, an antenna can be selected in a mode considered more appropriate to the current receiving condition by a user after the user checks both of the modes.

### EMBODIMENT 3.

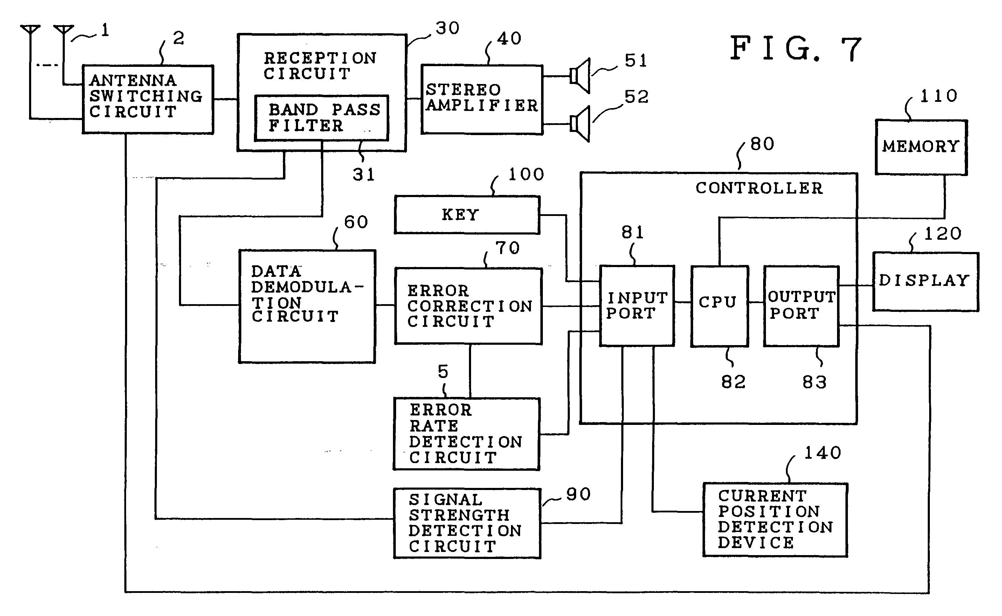

FIG. 7 is a block diagram showing a structure of a digital information receiver as another embodiment of the invention. The same reference numerals are attached to the same or similar portions as those of FIG. 1 and corresponding explanations are omitted. In this figure, the current position detection device 140 such as GPS (Global Positioning System) is connected to the input port 81 of the controller 80.

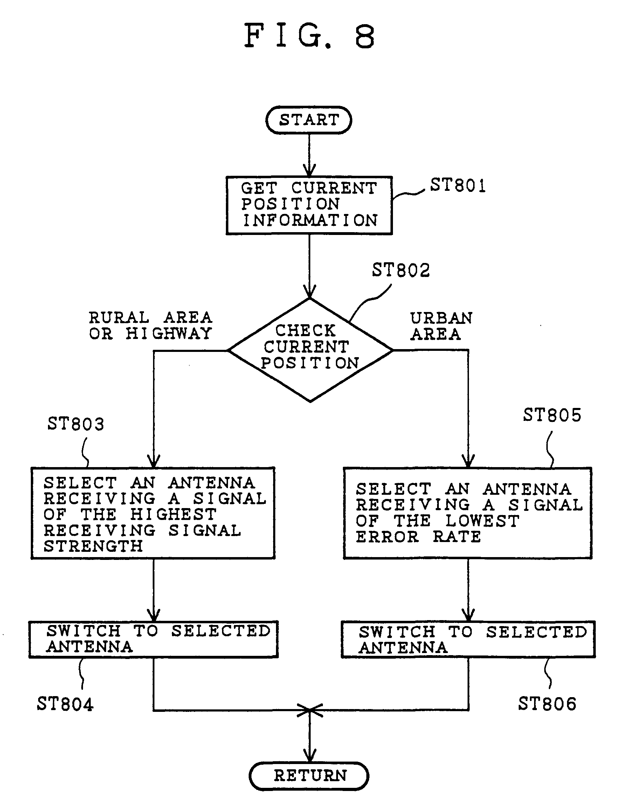

The diversity operation of this embodiment will be explained with reference to the flow chart of FIG. 8. The controller 80 obtains the current position information from the current position detection device 140 at step ST801. Based on this information, the controller checks whether the vehicle is in an urban area where the vehicle is obliged to move at a relatively low speed or it is in a rural area or a highway where the vehicle can move at a relatively high speed at step ST802. If the controller 80 recognizes that the vehicle is in a rural area or a highway, an antenna receiving a signal of the highest signal strength is selected based on a signal strength obtained from the signal strength detection circuit 90 at step ST803 and the current antenna is switched to the selected antenna at step ST804. On the other hand, if the controller 80 recognizes that the vehicle is in an urban area, an antenna receiving a signal of the lowest error rate is selected based on an error rate obtained from the error rate detection circuit 5 at step ST805 and the current antenna is switched to the selected antenna at step ST806. Therefore, an antenna selection can be performed depending on geographical features of the area in which the vehicle moves. In this embodiment, an antenna selection mode is decided based on the position of the vehicle in a map without measuring a real speed of the vehicle because an approximate speed of the vehicle is known to some extent depending on whether the vehicle is in an urban area or in a rural area.

An antenna selection may also be carried out by calculating a speed of the vehicle from position information obtained by the current position detection device 140 as shown in the embodiment 1.

### EMBODIMENT 4.

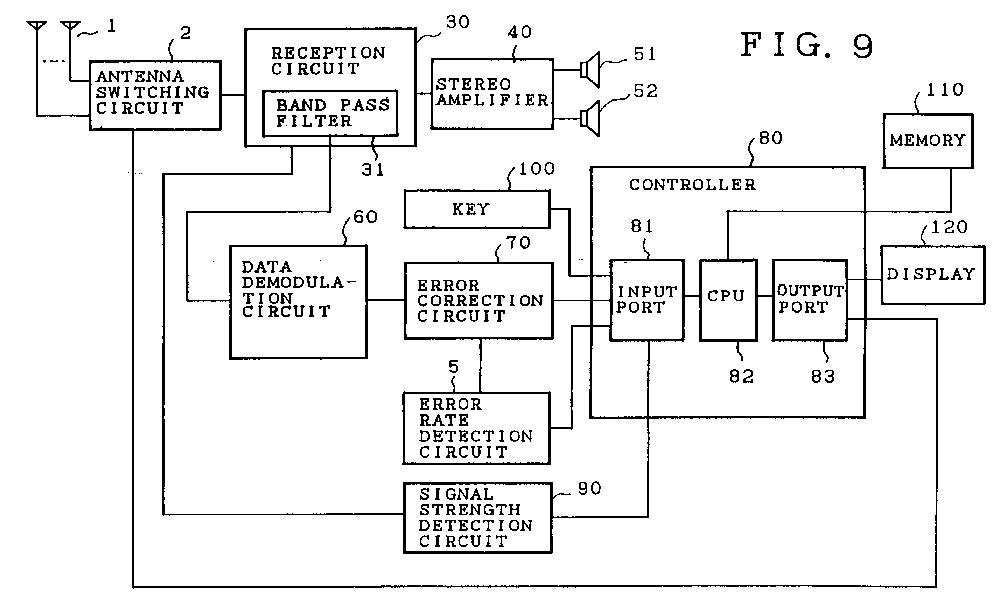

FIG. 9 is a block diagram showing a structure of a digital information receiver as another embodiment of the invention. The same reference numerals are attached to the same or similar portions as those of FIG. 1 and corresponding explanations are omitted. As shown in FIG. 9, the digital information receiver of this embodiment has the same structure as the receiver of embodiment 1 except that the speed sensor 7 is excluded. Further, the operational program of the CPU 82 of the controller 80 is different from that of the embodiment 1.

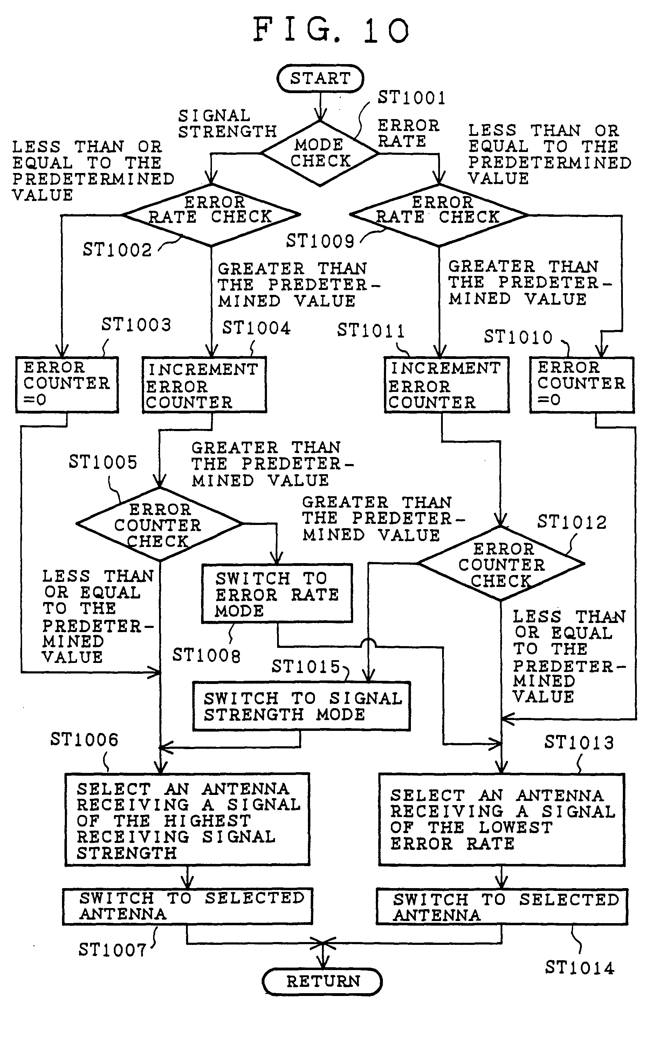

The diversity operation of this embodiment will be explained with reference to the flow chart of FIG. 10.

At first, the controller 80 checks whether a signal strength based mode in which an antenna is selected which receives a signal of the highest signal strength is selected or an error rate based mode in which an antenna is selected which receives a signal of the lowest error rate is selected at step ST1001. If the signal strength based mode is selected, the controller 80 checks whether the error rate is greater than the predetermined value P2 or not at step ST 1002. If the error rate is less than or equal to the predetermined value P2, the controller 80 sets the error counter zero at step ST1003 and the sequence moves to the step ST 1006. On the other hand, if the error rate is greater than the predetermined value P2, the error counter is incremented by one at step ST1004. The controller 80 checks whether the error counter value is greater than the predetermined value P3 or not at step ST1005. If the error counter value is greater than the predetermined value P3, the current mode is switched to an error rate based mode at step ST1008 and the sequence moves to step ST1013. On the other hand, the error counter value is less than or equal to the predetermined value P3, an antenna is selected which receives a signal of the highest signal strength based on the signal strength detection circuit 90 at step ST1006 and the current antenna is switched to the selected antenna at step ST1007.

On the other hand, at step ST1001, an error rate based mode is selected, the controller 80 checks whether the error rate obtained from the error rate detection circuit 5 is greater than the predetermined value P4 or not at step ST1009. If the error rate is less than or equal to the predetermined value P4, the controller sets the error counter value zero at step ST1010 and the sequence moves to step ST1013. On the other hand, the error rate is greater than the predetermined value P4, the error counter is incremented by one at step ST1011. The controller 80 checks whether the error counter value is greater than the predetermined value P5 or not at step ST1012. If the error counter value is greater than the predetermined value P5, the current mode is switched to the signal strength based mode at step ST1015 and the sequence moves to step ST1006. The operations of step ST1006 and ST1007 are done in the same way as explained above. At step ST1012, if the error counter value is less than or equal to the predetermined value P5, an antenna is selected which receives a signal of the lowest error rate based on the error rate obtained by the error rate detection circuit 5 at step ST1013 and the current antenna is switched to the selected antenna at step ST1014.

By repeating the above operations, in each mode, if the error rate is kept below a certain level for a certain period of time, antenna selection is performed in the other mode. In this embodiment, a speed sensor is not required.

### EMBODIMENT 5.

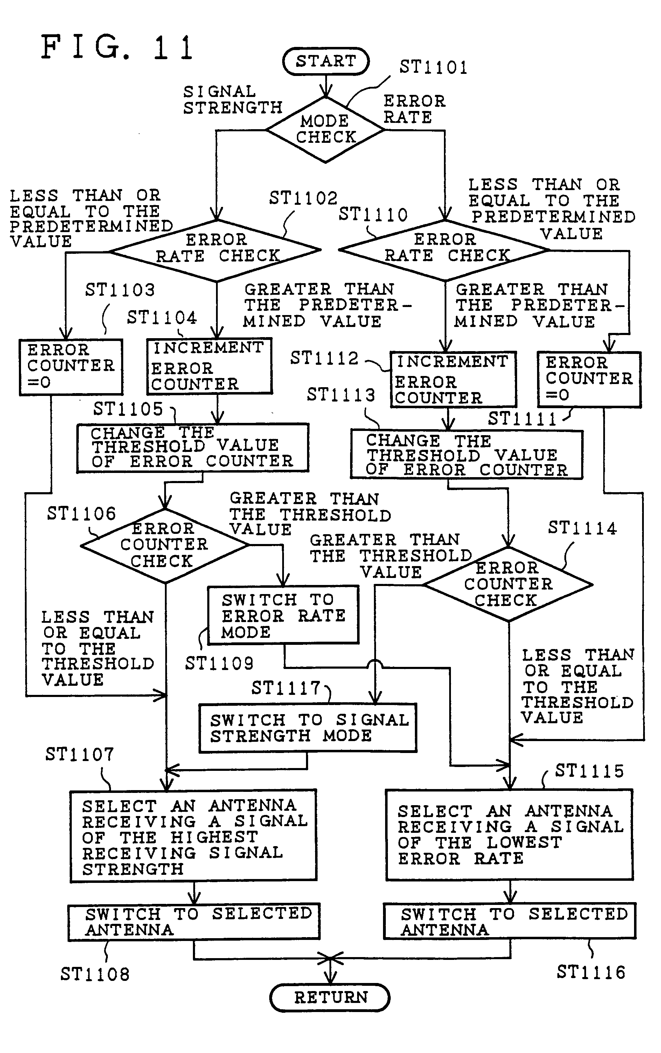

FIG. 11 is a flow chart showing the operation of a digital information receiver as another embodiment of the invention. The structure of this digital information receiver is basically the same as that shown in the FIG. 1. However, the operational program of the CPU 81 of controller 80 is different from that of the embodiment 1.

At first, the controller 80 checks whether a signal strength based mode in which an antenna is selected which receives a signal of the highest signal strength is selected or an error rate based mode in which an antenna is selected which receives a signal of the lowest error rate is selected at step ST1101. If the signal strength based mode is selected, the controller 80 checks whether the error rate is greater than the predetermined value P2 or not at step ST 1102. If the error rate is less than or equal to the predetermined value P2, the controller 80 sets the error counter zero at step ST1103 and the sequence moves to the step ST 1107. On the other hand, if the error rate is greater than the predetermined value P2, the error counter is incremented by one at step ST1104. The controller 80 changes the threshold value P3 of the error counter corresponding to the speed detected by speed sensor 7 at step ST1105.
Namely, the threshold value P3 is increased as the detected speed increases. The controller 80 checks whether the error counter value is greater than the threshold value P3 or not at step ST1106. If the error counter value is greater than the threshold value P3, the current mode is switched to an error based mode at step ST1109 and the sequence moves to step ST1115. On the other hand, the error counter value is less than or equal to the threshold value P3, an antenna is selected which receives a signal of the highest signal strength based on the signal strength detection circuit 90 at step ST1107 and the current antenna is switched to the selected antenna at step ST1108.

On the other hand, at step ST1101, an error based mode is selected, the controller 80 checks whether the error rate obtained from the error rate detection circuit 5 is greater than the threshold value P4 or not at step ST1110. If the error rate is less than or equal to the threshold value P4, the controller sets the error counter value zero at step ST1111 and the sequence moves to step ST1115. On the other hand, the error rate is greater than the value P4, the error counter is incremented by one at step ST1112. The controller 80 changes the threshold value P5 of the error counter corresponding to a speed detected by the speed sensor 7 at step ST1113. Namely, the threshold value P5 is increased as the detected speed increases. The controller 80 checks whether the error counter value is greater than the threshold value P5 or not at step ST1114. If the error counter value is greater than the threshold value P5, the current mode is switched to the signal strength based mode at step ST1117 and the sequence moves to step ST1107. The operations of step ST1107 and ST1108 are done in the same way as explained above. At step ST1114, if the error counter value is less than or equal to the threshold value P5, an antenna is selected which receives a signal of the lowest error rate based on the error rate obtained by the error rate detection circuit 5 at step ST1115 and the current antenna is switched to the selected antenna at step ST1116.

By repeating the above operations, an antenna selection mode is switched at a timing corresponding to a speed of the vehicle thereby an optimal antenna is selected. Further, in this embodiment, the more the speed increases, the more rarely the mode is changed. This reduces diversity noise which is caused by switching antenna too frequently.

### EMBODIMENT 6.

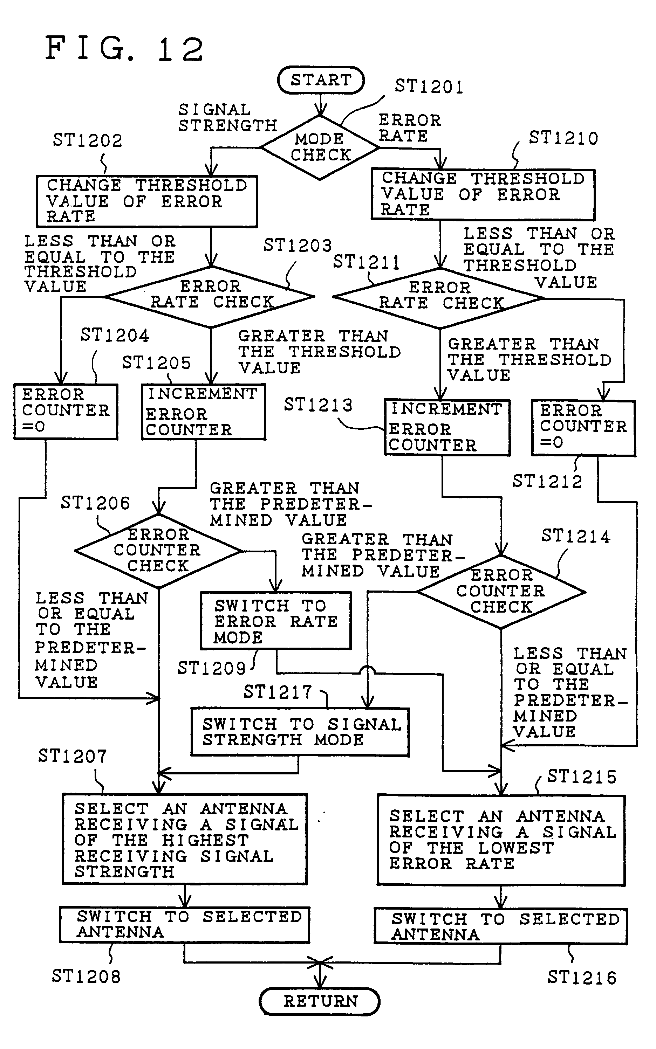

FIG. 12 is a flow chart showing the operation of a digital information receiver as another embodiment of the invention. The structure of this digital information receiver is basically the same as that shown in the FIG. 1. However, the operational program of the CPU 81 of the controller 80 is different from that of the embodiment 1.

At first, the controller 80 checks whether a signal strength based mode in which an antenna is selected which receives a signal of the highest signal strength is selected or an error rate based mode in which an antenna is selected which receives a signal of the lowest error rate is selected at step ST1201. If the signal strength based mode is selected, the threshold value P2 of the error rate is changed corresponding to a speed detected by the speed sensor 7 at step ST1202. Namely, the threshold value P2 is increased as the detected speed increases. the controller 80 checks whether the error rate is greater than the threshold value P2 or not at step ST 1203. If the error rate is less than or equal to the threshold value P2, the controller 80 sets the error counter zero at step ST1204 and the sequence moves to the step ST1207. On the other hand, if the error rate is greater than the threshold value P2, the error counter is incremented by one at step ST1205. The controller 80 checks whether the error counter value is greater than the predetermined value P3 or not at step ST1206. If the error counter value is greater than the predetermined value P3, the current mode is switched to an error rate based mode at step ST1209 and the sequence moves to step ST1215. On the other hand, the error counter value is less than or equal to the predetermined value P3, an antenna is selected which receives a signal of the highest signal strength based on the signal strength detection circuit 90 at step ST1207 and the current antenna is switched to the selected antenna at step ST1208.

On the other hand, at step ST1201, an error rate based mode is selected, the threshold value P4 of the error rate is changed corresponding to a speed detected by the speed sensor 7 at step ST1210. Namely, the threshold value P4 is increased as the detected speed increases. the controller 80 checks whether the error rate obtained from the error rate detection circuit 5 is greater than the threshold value P4 or not at step ST1211. If the error rate is less than or equal to the threshold value P4, the controller sets the error counter value zero at step ST1212 and the sequence moves to step ST1215. On the other hand, the error rate is greater than the threshold value P4, the error counter is incremented by one at step ST1213. The controller 80 checks whether the error counter value is greater than the predetermined value P5 or not at step ST1214. If the error counter value is greater than the predetermined value P5, the current mode is switched to the signal strength based mode at step ST1217 and the sequence moves to step ST1207. The operations of step ST1207 and ST1208 are done in the same way as explained above. At step ST1214, if the error counter value is less than or equal to the predetermined value P5, an antenna is selected which receives a signal of the lowest error rate based on the error rate obtained by the error rate detection circuit 5 at step ST1215 and the current antenna is switched to the selected antenna at step ST1216.

By repeating the above operations, an antenna selection mode is switched at a timing corresponding to a speed of the vehicle thereby an optimal antenna is selected. Further, in this embodiment, the more the speed increases, the more rarely the mode is changed. This reduces diversity noise which is caused by switching antenna too frequently.

### EMBODIMENT 7.

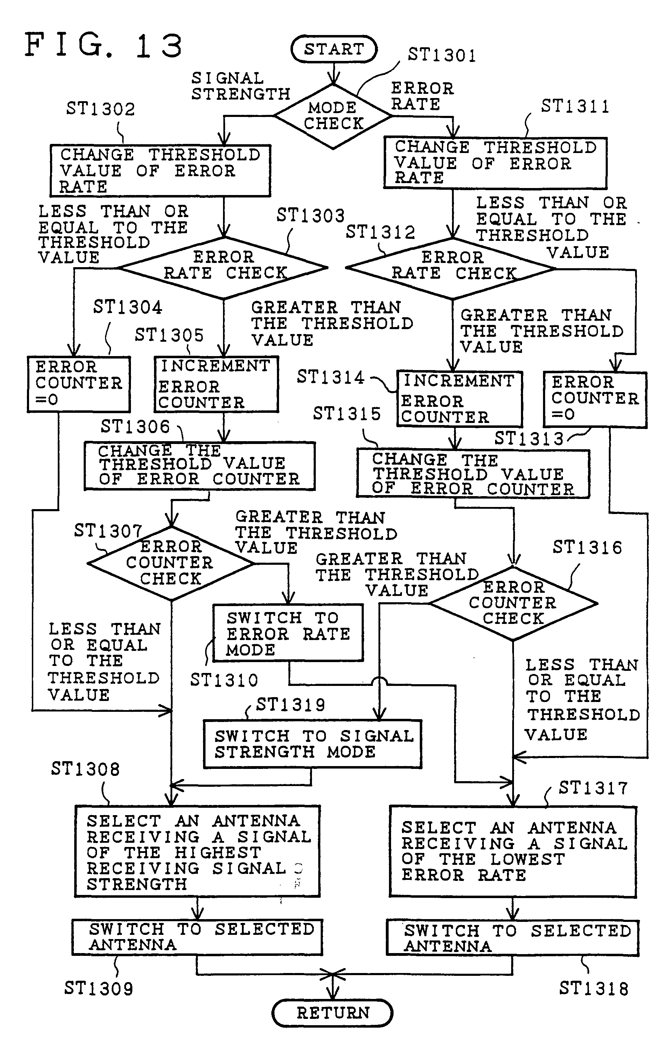

FIG. 13 is a flow chart showing the operation of a digital information receiver as another embodiment of the invention. The structure of this digital information receiver is basically the same as that shown in the FIG. 1. However, the operational program of the CPU 81 of the controller 80 is different from that of the embodiment 1.

At first, the controller 80 checks whether a signal strength based mode in which an antenna is selected which receives a signal of the highest signal strength is selected or an error rate based mode in which an antenna is selected which receives a signal of the lowest error rate is selected at step ST1301. If the signal strength based mode is selected, the threshold value P2 of the error rate is changed corresponding to a speed detected by the speed sensor 7 at step ST1302. Namely, the threshold value P2 is increased as the detected speed increases. The controller 80 checks whether the error rate is greater than the threshold value P2 or not at step ST1303. If the error rate is less than or equal to the threshold value P2, the controller 80 sets the error counter zero at step ST1304 and the sequence moves to the step ST1308. On the other hand, if the error rate is greater than the threshold value P2, the error counter is incremented by one at step ST1305. The controller 80 changes the threshold value P3 of the error counter corresponding to a speed detected by the speed sensor 7 at step ST1306. Namely, the threshold value P3 is increased as the detected speed increases. The controller 80 checks whether the error counter value is greater than the threshold value P3 or not at step ST1307. If the error counter value is greater than the threshold value P3, the current mode is switched to an error rate based mode at step ST1310 and the sequence moves to step ST1317. On the other hand, the error counter value is less than or equal to the threshold value P3, an antenna is selected which receives a signal of the highest signal strength based on the signal strength detection circuit 90 at step ST1308 and the current antenna is switched to the selected antenna at step ST1309.

On the other hand, at step ST1301, an error rate based mode is selected, the threshold value P4 of the error rate is changed corresponding to a speed detected by the speed sensor 7 at step ST1311. Namely, the threshold value P4 is increased as the detected speed increases. The controller 80 checks whether the error rate obtained from the error rate detection circuit 5 is greater than the threshold value P4 or not at step ST1312. If the error rate is less than or equal to the threshold value P4, the controller sets the error counter value zero at step ST1313 and the sequence moves to step ST1317. On the other hand, the error rate is greater than the threshold value P4, the error counter is incremented by one at step ST1314. The controller 80 changes the threshold value P5 of the error counter corresponding to the speed detected by speed sensor 7 at step ST1315. Namely, the threshold value P5 is increased as the detected speed increases. The controller 80 checks whether the error counter value is greater than the threshold value P5 or not at step ST1316. If the error counter value is greater than the threshold value P5, the current mode is switched to the signal strength based mode at step ST1319 and the sequence moves to step ST1308. The operations of step ST1308 and ST1309 are done in the same way as explained above. At step ST1316, if the error counter value is less than or equal to the threshold value P5, an antenna is selected which receives a signal of the lowest error rate based on the error rate obtained by the error rate detection circuit 5 at step ST1317 and the current antenna is switched to the selected antenna at step ST1318.

By repeating the above operations, an antenna selection mode is switched at a timing corresponding to a speed of the vehicle thereby an optimal antenna is selected. Further, in this embodiment, the more the speed increases, the more rarely the mode is changed. This reduces diversity noise which is caused by switching an antenna too frequently.

### EMBODIMENT 8.

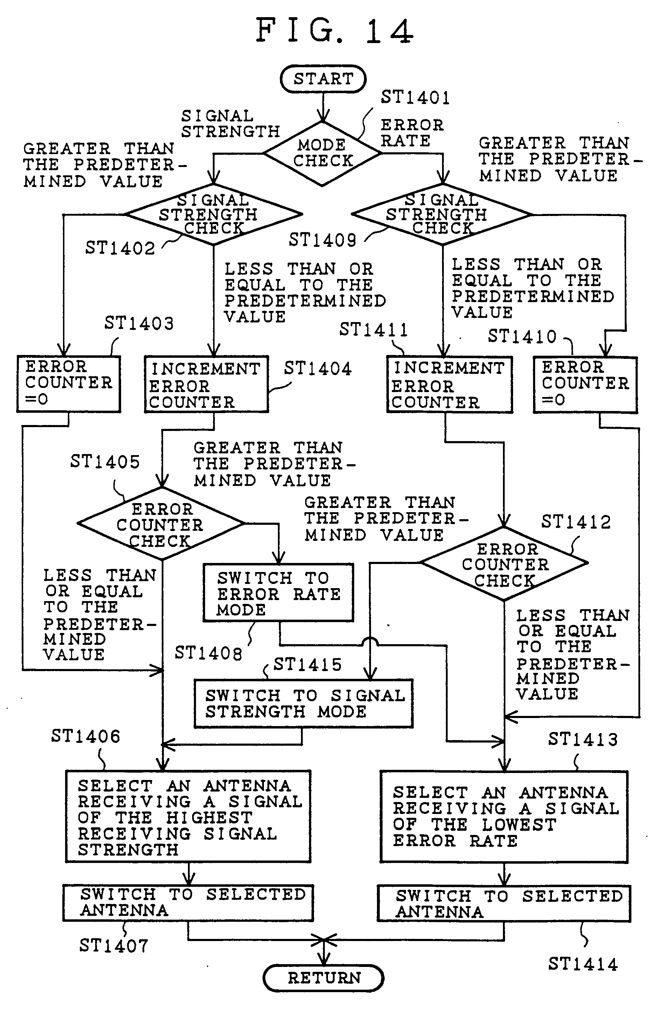

FIG. 14 is a flow chart showing the operation of a digital information receiver as another embodiment of the invention. The structure of this digital information receiver is basically the same as that shown in the FIG. 9. However, operational program of the CPU 81 of the controller 80 is different from that of the embodiment 4.

At first, the controller 80 checks whether a signal strength based mode in which an antenna is selected which receives a signal of the highest signal strength is selected or an error rate based mode in which an antenna is selected which receives a signal of the lowest error rate is selected at step ST1401. If the signal strength based mode is selected, the controller 80 checks whether the signal strength is greater than the predetermined value P6 or not at step ST1402. If the signal strength is greater than the predetermined value P6, the controller 80 sets the error counter zero at step ST1403 and the sequence moves to the step ST1406. On the other hand, if the signal strength is less than or equal to the predetermined value P6, the error counter is incremented by one at step ST1404. The controller 80 checks whether the error counter value is greater than the predetermined value P7 or not at step ST1405. If the error counter value is greater than the predetermined value P7, the current mode is switched to an error rate based mode at step ST1408 and the sequence moves to step ST1413. On the other hand, the error counter value is less than or equal to the predetermined value P7, an antenna is selected which receives a signal of the highest signal strength based on the signal strength detection circuit 90 at step ST1406 and the current antenna is switched to the selected antenna at step ST1407.

On the other hand, at step ST1401, an error rate based mode is selected, the controller 80 checks whether the signal strength obtained from the signal strength detection circuit 90 is greater than the predetermined value P8 or not at step ST1409. If the signal strength is greater than the predetermined value P8, the controller sets the error counter value zero at step ST1410 and the sequence moves to step ST1413. On the other hand, the signal strength is less than or equal to the predetermined value P8, the error counter is incremented by one at step ST1411. The controller 80 checks whether the error counter value is greater than the predetermined value P9 or not at step ST1412. If the error counter value is greater than the predetermined value P9, the current mode is switched to the signal strength based mode at step ST1415 and the sequence moves to step ST1406. The operations of step ST1406 and ST1407 are done in the same way as explained above. At step ST1412, if the error counter value is less than or equal to the predetermined value P9, an antenna is selected which receives a signal of the lowest error rate based on the error rate obtained by the error rate detection circuit 5 at step ST1413 and the current antenna is switched to the selected antenna at step ST1414.

By repeating the above operations, in each mode, if the signal strength is kept below a certain level for a certain period of time, an antenna selection is performed in the other mode. In this embodiment, a speed sensor is not required.

### EMBODIMENT 9.

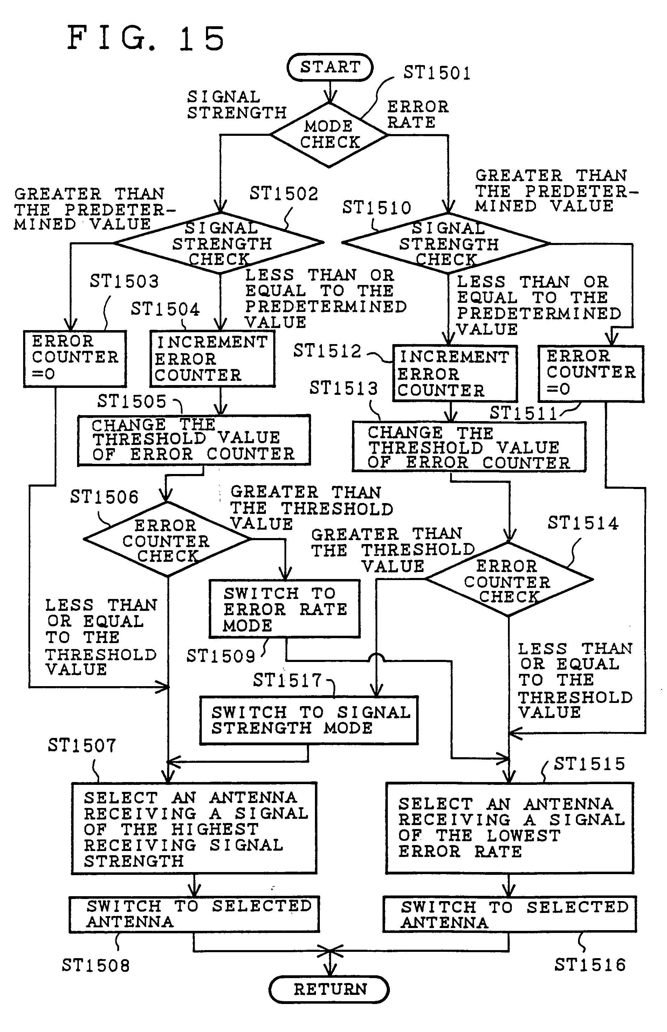

FIG. 15 is a flow chart showing the operation of a digital information receiver as another embodiment of the invention. The structure of this digital information receiver is basically the same as that shown in the FIG. 1. However, the operational program of the CPU 81 of the controller 80 is different from that of the embodiment 1.

At first, the controller 80 checks whether a signal strength based mode in which an antenna is selected which receives a signal of the highest signal strength is selected or an error rate based mode in which an antenna is selected which receives a signal of the lowest error rate is selected at step ST1501. If the signal strength based mode is selected, the controller 80 checks whether the signal strength is greater than the predetermined value P6 or not at step ST1502. If the signal strength is greater than the predetermined value P6, the controller 80 sets the error counter zero at step ST1503 and the sequence moves to the step ST1507. On the other hand, if the signal strength is less than or equal to the predetermined value P6, the error counter is incremented by one at step ST1504. Then, The controller 80 changes the threshold value P7 of the error counter corresponding to a speed detected by the speed sensor 7 at step ST1505. Namely, the threshold value P7 is increased as the detected speed increases. The controller 80 checks whether the error counter value is greater than the threshold value P7 or not at step ST1506. If the error counter value is greater than the threshold value P7, the current mode is switched to an error rate based mode at step ST1509 and the sequence moves to step ST1515. On the other hand, the error counter value is less than or equal to the threshold value P7, an antenna is selected which receives a signal of the highest signal strength based on the signal strength detection circuit 90 at step ST1507 and the current antenna is switched to the selected antenna at step ST1508.

On the other hand, at step ST1501, an error rate based mode is selected, the controller 80 checks whether the signal strength obtained from the signal strength detection circuit 90 is greater than the predetermined value P8 or not at step ST1510. If the signal strength is greater than the predetermined value P8, the controller sets the error counter value zero at step ST1511 and the sequence moves to step ST1515. On the other hand, the signal strength is less than or equal to the predetermined value P8, the error counter is incremented by one at step ST1512. Then, The controller 80 changes the threshold value P9 of the error counter corresponding to a speed detected by the speed sensor 7 at step ST1513. Namely, the threshold value P9 is increased as the detected speed increases.
The controller 80 checks whether the error counter value is greater than the threshold value P9 or not at step ST1514. If the error counter value is greater than the threshold value P9, the current mode is switched to the signal strength based mode at step ST1517 and the sequence moves to step ST1507. The operations of step ST1507 and ST1508 are done in the same way as explained above. At step ST1514, if the error counter value is less than or equal to the threshold value P9, an antenna is selected which receives a signal of the lowest error rate based on the error rate obtained by the error rate detection circuit 5 at step ST1515 and the current antenna is switched to the selected antenna at step ST1516.

By repeating the above operations, an antenna selection mode is switched at a timing corresponding to a speed of the vehicle thereby an optimal antenna is selected. Further, in this embodiment, the more the speed increases, the more rarely the mode is changed. This reduces diversity noise which is caused by switching an antenna too frequently.

### EMBODIMENT 10.

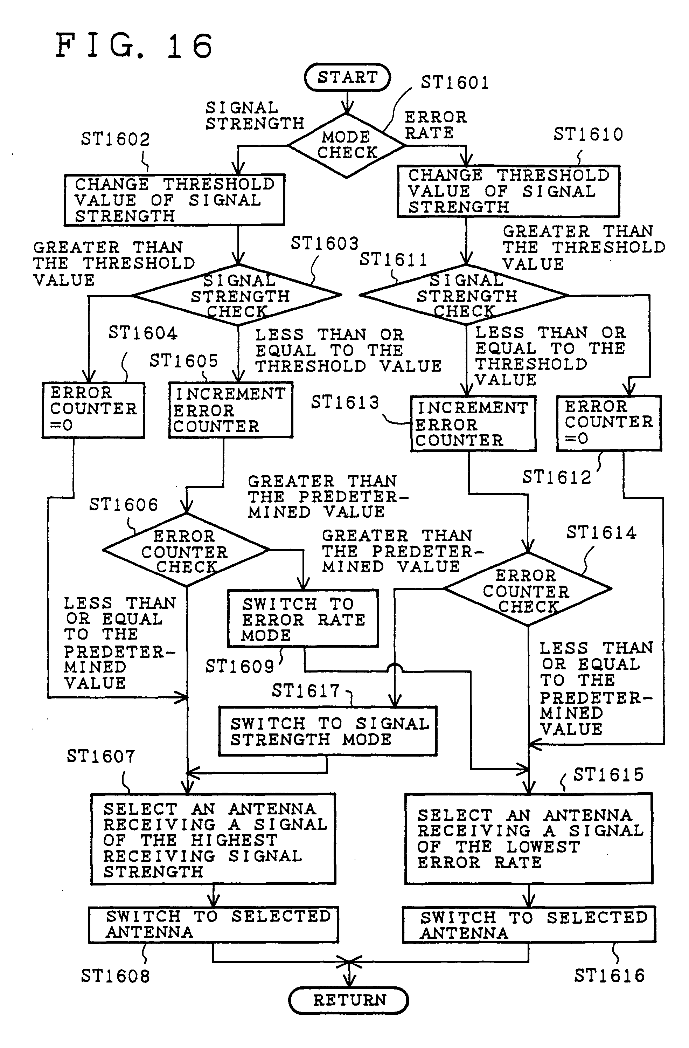

FIG. 16 is a flow chart showing the operation of a digital information receiver as another embodiment of the invention. The structure of this digital information receiver is basically the same as that shown in the FIG. 1. However, the operational program of the CPU 81 of the controller 80 is different from that of the embodiment 1.

At first, the controller 80 checks whether a signal strength based mode in which an antenna is selected which receives a signal of the highest signal strength is selected or an error rate based mode in which an antenna is selected which receives a signal of the lowest error rate is selected at step ST1601. If the signal strength based mode is selected, the threshold value P6 of the signal strength is changed corresponding to a speed detected by the speed sensor 7 at step ST1602. Namely, the threshold value P6 is decreased as the detected speed increases. The controller 80 checks whether the signal strength is greater than the threshold value P6 or not at step ST1603. If the signal strength is greater than the threshold value P6, the controller 80 sets the error counter zero at step ST1604 and the sequence moves to the step ST1607. On the other hand, if the signal strength is less than or equal to the threshold value P6, the error counter is incremented by one at step ST1605. The controller 80 checks whether the error counter value is greater than the predetermined value P7 or not at step ST1606. If the error counter value is greater than the predetermined value P7, the current mode is switched to an error rate based mode at step ST1609 and the sequence moves to step ST1615. On the other hand, the error counter value is less than or equal to the predetermined value P7, an antenna is selected which receives a signal of the highest signal strength based on the signal strength detection circuit 90 at step ST1607 and the current antenna is switched to the selected antenna at step ST1608.

On the other hand, at step ST1601, an error based mode is selected, the threshold value P8 of the signal strength is changed corresponding to a speed detected by the speed sensor 7 at step ST1610. Namely, the threshold value P8 is decreased as the detected speed increases. The controller 80 checks whether the signal strength obtained from the signal strength detection circuit 90 is greater than the threshold value P8 or not at step ST1611. If the signal strength is greater than the threshold value P8, the controller 80 sets the error counter value zero at step ST1612 and the sequence moves to step ST1615. On the other hand, the signal strength is less than or equal to the threshold value P8, the error counter is incremented by one at step ST1613. The controller 80 checks whether the error counter value is greater than the predetermined value P9 or not at step ST1614. If the error counter value is greater than the predetermined value P9, the current mode is switched to the signal strength based mode at step ST1617 and the sequence moves to step ST1607. The operations of step ST1607 and ST1608 are done in the same way as explained above. At step ST1614, if the error counter value is less than or equal to the predetermined value P9, an antenna is selected which receives a signal of the lowest error rate based on the error rate obtained by the error rate detection circuit 5 at step ST1615 and the current antenna is switched to the selected antenna at step ST1616.

By repeating the above operations, an antenna selection mode is switched at a timing corresponding to a speed of the vehicle thereby an optimal antenna is selected. Further, in this embodiment, the more the speed increases, the more rarely the mode is changed. This reduces diversity noise which is caused by switching an antenna too frequently.

### EMBODIMENT 11.

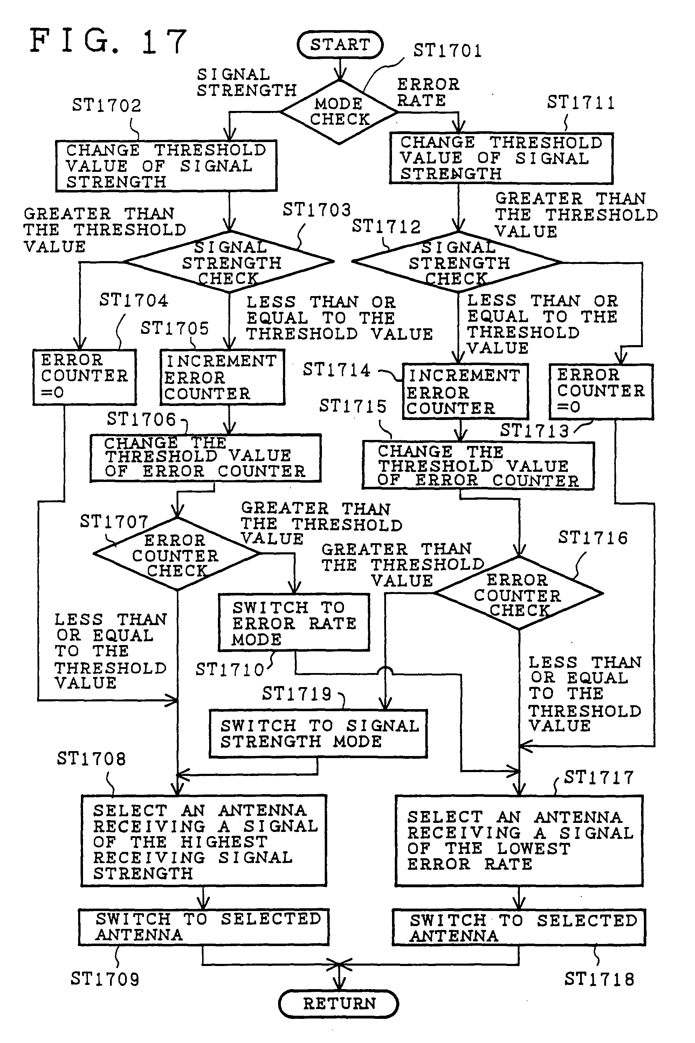

FIG. 17 is a flow chart showing the operation of a digital information receiver as another embodiment of the invention. The structure of this digital information receiver is basically the same as that shown in the FIG. 1. However, the operational program of the CPU 81 of the controller 80 is different from that of the embodiment 1.

At first, the controller 80 checks whether a signal strength based mode in which an antenna is selected which receives a signal of the highest signal strength is selected or an error rate based mode in which an antenna is selected which receives a signal of the lowest error rate is selected at step ST1701. If the signal strength based mode is selected, the threshold value P6 of the signal strength is changed corresponding to a speed detected by the speed sensor 7 at step ST1702. Namely, the threshold value P6 is decreased as the detected speed increases. The controller 80 checks whether the signal strength is greater than the threshold value P6 or not at step ST1703. If the signal strength is greater than the threshold value P6, the controller 80 sets the error counter zero at step ST1704 and the sequence moves to the step ST1708. On the other hand, if the signal strength is less than or equal to the threshold value P6, the error counter is incremented by one at step ST1705. Then, the controller 80 changes the threshold value P7 of the error counter corresponding to a speed detected by the speed sensor 7 at step ST1706. Namely, the threshold value P7 is increased as the detected speed increases. The controller 80 checks whether the error counter value is greater than the threshold value P7 or not at step ST1707. If the error counter value is greater than the threshold value P7, the current mode is switched to an error rate based mode at step ST1710 and the sequence moves to step ST1717. On the other hand, the error counter value is less than or equal to the threshold value P7, an antenna is selected which receives a signal of the highest signal strength based on the signal strength detection circuit 90 at step ST1708 and the current antenna is switched to the selected antenna at step ST1709.

On the other hand, at step ST1701, an error rate based mode is selected, the threshold value P8 of the signal strength is changed corresponding to a speed detected by the speed sensor 7 at step ST1711. Namely, the threshold value P8 is decreased as the detected speed increases. The controller 80 checks whether the signal strength obtained from the signal strength detection circuit 90 is greater than the threshold value P8 or not at step ST1712. If the signal strength is greater than the threshold value P8, the controller 80 sets the error counter value zero at step ST1713 and the sequence moves to step ST1717. On the other hand, the signal strength is less than or equal to the threshold value P8, the error counter is incremented by one at step ST1714. Then, the controller 80 changes the threshold value P9 of the error counter corresponding to a speed detected by the speed sensor 7 at step ST1715. Namely, the threshold value P9 is increased as the detected speed increases. The controller 80 checks whether the error counter value is greater than the threshold value P9 or not at step ST1716. If the error counter value is greater than the threshold value P9, the current mode is switched to the signal strength based mode at step ST1719 and the sequence moves to step ST1708. The operations of step ST1708 and ST1709 are done in the same way as explained above. At step ST1716, if the error counter value is less than or equal to the threshold value P9, an antenna is selected which receives a signal of the lowest error rate based on the error rate obtained by the error rate detection circuit 5 at step ST1717 and the current antenna is switched to the selected antenna at step ST1718.

By repeating the above operations, an antenna selection mode is switched at a timing corresponding to a speed of the vehicle thereby an optimal antenna is selected. Further, in this embodiment, the more the speed increases, the more rarely the mode is changed. This reduces diversity noise which is caused by switching an antenna too frequently.

While preferred embodiments of the invention has been described using specific terms, such description is made for illustrative purpose and it is to be understood that changes and variations may be made without departing from the scope of the appended claims.

## Claims

1. A digital information receiver for a vehicle, comprising a plurality of antennas, an antenna switching circuit (2) which selects one of the antennas according to an external instruction signal,
means (30) for performing reception processing to a signal including digital information, received by the antenna selected by the antenna selector;
means (60) for demodulating the received signal thereby reproducing the digital information included in the received signal;
means (5) for detecting an error rate of the demodulated digital information;
means (90) for detecting a signal strength of the received signal; and
means (80) for controlling the antenna switching circuit (2) through sending the external instruction signal such that an antenna selection mode is selectively performed between a signal strength based antenna selection mode in which an antenna is selected which receives a signal of the highest signal strength and an error rate based antenna selection mode in which an antenna is selected which receives a signal of the lowest error rate.

2. A digital information receiver according to claim 1, **characterized in that** the digital information receiver further includes means (7) for detecting a moving speed of the vehicle, and **in that** the controlling means controls the antenna switching circuit (2) such that the current antenna is switched to an antenna receiving a signal of the highest signal strength when a moving speed detected by the moving speed detecting means is greater than a predetermined value and otherwise the current antenna is switched to an antenna receiving a signal of the lowest error rate.

3. A digital information receiver according to claim 1, **characterized in that** the digital information receiver further includes an input device for inputting an instruction from a user which mode should be used between the signal strength based antenna selection mode and the error rate based antenna selection mode, and **in that** the controlling means controls the antenna switching circuit (2) such that an antenna is selected in a mode inputted to the input device.

4. A digital information receiver according to claim 1, **characterized in that** the digital information receiver further includes means for detecting a current position of the vehicle on a map, and **in that** the controlling means controls the antenna switching circuit (2) such that an antenna is selected in the error rate based mode when the detected current position is in an urban area and an antenna is selected in the signal strength based mode when the detected current position is in a rural area or highway.

5. A digital information receiver according to claim 1, **characterized in that** the controlling means controls the antenna switching circuit (2) such that the current antenna selection mode is switched to the error rate based antenna selection mode when the signal strength based mode is selected and the error rate of the digital information is kept greater than a predetermined value for a predetermined time period and the current antenna selection mode is switched to the signal strength based antenna selection mode when the error rate based mode is selected and the error rate of the digital information is kept greater than a predetermined value for a predetermined time period.

6. A digital information receiver according to claim 1, **characterized in that** the digital information receiver further includes means for detecting a moving speed of the vehicle, and **in that** the controlling means controls the antenna switching circuit (2) such that the current antenna selection mode is switched to the error rate based antenna selection mode when the signal strength based mode is selected and the error rate of the digital information is kept greater than a predetermined value for a time period corresponding to a speed detected by the moving speed detecting means (7) and the current antenna selection mode is switched to the signal strength based antenna selection mode when the error rate based mode is selected and the error rate of the digital information is kept greater than a predetermined value for a time period corresponding to a speed detected by the moving speed detecting means.

7. A digital information receiver according to claim 1, **characterized in that** the digital information receiver further includes means for detecting a moving speed of the vehicle, and **in that** the controlling means controls the antenna switching circuit (2) such that the current antenna selection mode is switched to the error rate based antenna selection mode when the signal strength based mode is selected and the error rate of the digital information is kept greater than a value corresponding to a speed detected by the moving speed detecting means (7) for a predetermined time period and the current antenna selection mode is switched to the signal strength based antenna selection mode when the error rate based mode is selected and the error rate of the digital information is kept greater than a value corresponding to a speed detected by the moving speed detecting means for a predetermined time period.

8. A digital information receiver according to claim 1, **characterized in that** the digital information receiver further includes means for detecting a moving speed of the vehicle, and **in that** the controlling means controls the antenna switching circuit (2) such that the current antenna selection mode is switched to the error rate based antenna selection mode when the signal strength based mode is selected and the error rate of the digital information is kept greater than a value corresponding to a speed detected by the moving speed detecting means (7) for a time period corresponding to a speed detected by the moving speed detecting means and the current antenna selection mode is switched to the signal strength based antenna selection mode when the error rate based mode is selected and the error rate of the digital information is kept greater than a value corresponding to a speed detected by the moving speed detecting means for a time period corresponding to a speed detected by the moving speed detecting means.

9. A digital information receiver according to claim 1, **characterized in that** the controlling means controls the antenna switching circuit (2) such that the current antenna selection mode is switched to the error rate based antenna selection mode when the signal strength based mode is selected and the signal strength of the digital information is kept less than a predetermined value for a predetermined time period and the current antenna selection mode is switched to the signal strength based antenna selection mode when the error rate based mode is selected and the signal strength of the digital information is kept less than a predetermined value for a predetermined time period.

10. A digital information receiver according to claim 1, **characterized in that** the digital information receiver further includes means for detecting a moving speed of the vehicle, and **in that** the controlling means controls the antenna swiching circuit (2) such that the current antenna selection mode is switched to the error rate based antenna selection mode when the signal strength based mode is selected and the signal strength of the digital information is kept less than a predetermined value for a time period corresponding to a speed detected by the moving speed detecting means (7) and the current antenna selection mode is switched to the signal strength based antenna selection mode when the error rate based mode is selected and the signal strength of the digital information is kept less than a predetermined value for a time period corresponding to a speed detected by the moving speed detecting means.

11. A digital information receiver according to claim 1, **characterized in that** the digital information receiver further includes means for detecting a moving speed of the vehicle, and **in that** the controlling means controls the antenna sweatching circuit (2) such that the current antenna selection mode is switched to the error rate based antenna selection mode when the signal strength based mode is selected and the signal strength of the digital information is kept less than a value corresponding to a speed detected by the moving speed detecting means for a predetermined time period and the current antenna selection mode is switched to the signal strength based antenna selection mode when the error rate based mode is selected and the signal strength of the digital information is kept less than a value corresponding to a speed detected by the moving speed detecting means (7) for a predetermined time period.

12. A digital information receiver according to claim 1, **characterized in that** the digital information receiver further includes means for detecting a moving speed of the vehicle, and **in that** the controlling means controls the antenna switching circuit (2) such that the current antenna selection mode is switched to the error rate based antenna selection mode when the signal strength based mode is selected and the signal strength of the digital information is kept less than a value corresponding to a speed detected by the moving speed detecting means for a time period corresponding to a speed detected by the moving speed detecting means and the current antenna selection mode is switched to the signal strength based antenna selection mode when the error rate based mode is selected and the signal strength of the digital information is kept less than a value corresponding to a speed detected by the moving speed detecting means for a time period corresponding to a speed detected by the moving speed detecting means.

## Patentansprüche

1. Digitaler Informationsempfänger für ein Fahrzeug mit mehreren Antennen, einem Antennenschalterkreis (2), der eine der Antennen entsprechend einem externen Befehlssignal auswählt,
einer Vorrichtung (30) zur Durchführung einer Empfangsverarbeitung bei einem digitale Informationen enthaltenden Signal, das von der von der Antennenauswahlvorrichtung ausgewählten Antenne empfangen wurde;
einer Vorrichtung (60) zum Demodulieren des empfangenen Signals, wodurch die in dem empfangenen Signal enthaltenen digitalen Informationen wiedergegeben werden;
einer Vorrichtung (5) zum Erfassen einer Fehlerrate der demodulierten digitalen Informationen; einer Vorrichtung (90) zum Erfassen einer Signalstärke des empfangenen Signals; und
einer Vorrichtung (80) zum Steuern des Antennenschalterkreises durch Senden eines externen Befehlssignals in der Weise, daß ein Antennenauswahlbetrieb selektiv durchgeführt wird zwischen einem auf einer Signalstärke basierenden Antennenauswahlbetrieb, in welchem eine Antenne ausgewählt wird, die ein Signal mit der höchsten Signalstärke empfängt, und einem auf einer Fehlerrate basierenden Antennenauswahlbetrieb, in welchem eine Antenne ausgewählt wird, die ein Signal mit der geringsten Fehlerrate empfängt.

2. Digitaler Informationsempfänger nach Anspruch 1, **dadurch gekennzeichnet, daß** der digitale Informationsempfänger weiterhin eine Vorrichtung (7) zum Erfassen einer Bewegungsgeschwindigkeit des Fahrzeugs enthält und daß.die Steuervorrichtung den Antennenschalterkreis (2) derart steuert, daß die gegenwärtige Antenne zu einer Antenne geschaltet wird, die ein Signal mit der höchsten Signalstärke empfängt, wenn eine von der Erfassungsvorrichtung für die Bewegungsgeschwindigkeit erfaßte Bewegungsgeschwindigkeit größer als ein vorbestimmter Wert ist, und andernfalls die gegenwärtige Antenne zu einer Antenne geschaltet wird, die ein Signal mit der niedrigsten Fehlerrate empfängt.

3. Digitaler Informationsempfänger nach Anspruch 1, **dadurch gekennzeichnet, daß** der digitale Informationsempfänger weiterhin eine Eingabevorrichtung für die Eingabe eines Befehls von einem Benutzer darüber enthält, welcher Betrieb zwischen dem auf der Signalstärke basierenden Antennenauswahlbetrieb und dem auf der Fehlerrate basierenden Antennenauswahlbetrieb verwendet werden sollte, und daß die Steuervorrichtung den Antennenschalterkreis (2) so steuert, daß eine Antenne in einem zu der Eingabevorrichtung eingegebenen Betrieb ausgewählt wird.

4. Digitaler Informationsempfänger nach Anspruch 1, **dadurch gekennzeichnet, daß** der digitale Informationsempfänger weiterhin eine Vorrichtung zum Erfassen einer gegenwärtigen Position des Fahrzeugs auf einer Karte enthält und daß die Steuervorrichtung den Antennenschalterkreis (2) derart steuert, daß eine Antenne in dem auf der Fehlerrate basierenden Betrieb ausgewählt wird, wenn die erfaßte gegenwärtige Position in einem städtischen Bereich ist, und eine Antenne in dem auf der Signalstärke basierenden Betrieb ausgewählt wird, wenn die erfaßte gegenwärtige Position in einem ländlichen Bereich oder auf einer Landstraße ist.

5. Digitaler Informationsempfänger nach Anspruch 1, **dadurch gekennzeichnet, daß** die Steuervorrichtung den Antennenschalterkreis (2) so steuert, daß der gegenwärtige Antennenauswahlbetrieb zu dem auf der Fehlerrate basierenden Antennenauswahlbetrieb geschaltet wird, wenn der auf der Signalstärke basierende Betrieb ausgewählt ist und die Fehlerrate der digitalen Informationen größer als ein vorbestimmter Wert während einer vorbestimmten Zeitperiode gehalten wird, und der gegenwärtige Antennenauswahlbetrieb zu dem auf der Signalstärke basierenden Antennenauswahlbetrieb geschaltet wird, wenn der auf der Fehlerrate basierende Betrieb ausgewählt ist und die Fehlerrate der digitalen Informationen während einer vorbestimmten Zeitperiode größer als ein vorbestimmter Wert gehalten wird.

6. Digitaler Informationsempfänger nach Anspruch 1, **dadurch gekennzeichnet, daß** der digitale Informationsempfänger weiterhin eine Vorrichtung zum Erfassen einer Bewegungsgeschwindigkeit des Fahrzeugs enthält, und daß die Steuervorrichtung den Antennenschalterkreis (2) derart steuert, daß der gegenwärtige Antennenauswahlbetrieb zu dem auf der Fehlerrate basierenden Antennenauswahlbetrieb geschaltet wird, wenn der auf der Signalstärke basierende Betrieb ausgewählt ist und die Fehlerrate der digitalen Informationen größer als ein vorbestimmter Wert während einer Zeitperiode entsprechend einer von der Erfassungsvorrichtung (7) für die Bewegungsgeschwindigkeit erfaßten Geschwindigkeit gehalten wird, und der gegenwärtige Antennenauswahlbetrieb zu dem auf der Signalstärke basierenden Antennenauswahlbetrieb geschaltet wird, wenn der auf der Fehlerrate basierende Betrieb ausgewählt ist und die Fehlerrate der digitalen Informationen größer als ein vorbestimmter Wert während einer Zeitperiode entsprechend einer von der Erfassungsvorrichtung für die Bewegungsgeschwindigkeit erfaßten Geschwindigkeit gehalten wird.

7. Digitaler Informationsempfänger nach Anspruch 1, **dadurch gekennzeichnet, daß** der digitale Informationsempfänger weiterhin eine Vorrichtung zum Erfassen einer Bewegungsgeschwindigkeit des Fahrzeugs enthält, und daß die Steuervorrichtung den Antennenschalterkreis (2) derart steuert, daß der gegenwärtige Antennenauswahlbetrieb zu dem auf der Fehlerrate basierenden Antennenauswahlbetrieb geschaltet wird, wenn der auf der Signalstärke basierende Betrieb ausgewählt ist und die Fehlerrate der digitalen Informationen größer als ein Wert entsprechend der von der Erfassungsvorrichtung (7) für die Bewegungsgeschwindigkeit erfaßten Geschwindigkeit während einer vorbestimmten Zeitperiode gehalten wird, und der gegenwärtige Antennenauswahlbetrieb zu dem auf der Signalstärke basierenden Antennenauswahlbetrieb geschaltet wird, wenn der auf der Fehlerrate basierende Betrieb ausgewählt ist und die Fehlerrate der digitalen Informationen größer als ein Wert entsprechend einer von der Erfassungsvorrichtung für die Bewegungsgeschwindigkeit erfaßten Geschwindigkeit während einer vorbestimmten Zeitperiode gehalten wird.

8. Digitaler Informationsempfänger nach Anspruch 1, **dadurch gekennzeichnet, daß** der digitale Informationsempfänger weiterhin eine Vorrichtung zum Erfassen einer Bewegungsgeschwindigkeit des Fahrzeugs enthält und daß die Steuervorrichtung den Antennenschalterkreis (2) derart steuert, daß der gegenwärtige Antennenauswahlbetrieb zu dem auf der Fehlerrate basierenden Antennenauswahlbetrieb geschaltet wird, wenn der auf der Signalstärke basierende Betrieb ausgewählt ist und die Fehlerrate der digitalen Informationen größer als ein Wert entsprechend einer von der Erfassungsvorrichtung (7) für die Bewegungsgeschwindigkeit erfaßten Geschwindigkeit während einer Zeitperiode entsprechend einer von der Erfassungsvorrichtung für die Bewegungsgeschwindigkeit erfaßten Geschwindigkeit gehalten wird, und der gegenwärtige Antennenauswahlbetrieb zu dem auf der Signalstärke basierenden Antennenauswahlbetrieb geschaltet wird, wenn der auf der Fehlerrate basierende Betrieb ausgewählt ist und die Fehlerrate der digitalen Informationen größer als ein Wert entsprechend einer von der Erfassungsvorrichtung für die Bewegungsgeschwindigkeit erfaßten Geschwindigkeit während einer Zeitperiode entsprechend einer von der Erfassungsvorrichtung für die Bewegungsgeschwindigkeit erfaßten Geschwindigkeit gehalten wird.

9. Digitaler Informationsempfänger nach Anspruch 1, **dadurch gekennzeichnet, daß** die Steuervorrichtung den Antennenschalterkreis (2) so steuert, daß der gegenwärtige Antennenauswahlbetrieb zu dem auf der Fehlerrate basierenden Antennenauswahlbetrieb geschaltet wird, wenn der auf der Signalstärke basierende Betrieb ausgewählt ist und die Signalstärke der digitalen Informationen niedriger als ein vorbestimmter Wert während einer vorbestimmten Zeitperiode gehalten wird, und der gegenwärtige Antennenauswahlbetrieb zu dem auf der Signalstärke basierenden Antennenauswahlbetrieb geschaltet wird, wenn der auf der Fehlerrate basierende Betrieb ausgewählt ist und die Signalstärke der digitalen Informationen niedriger als ein vorbestimmter Wert während einer vorbestimmten Zeitperiode gehalten wird.

10. Digitaler Informationsempfänger nach Anspruch 1, **dadurch gekennzeichnet, daß** der digitale Informationsempfänger weiterhin eine Vorrichtung zum Erfassen einer Bewegungsgeschwindigkeit des Fahrzeugs enthält, und daß die Steuervorrichtung den Antennenschalterkreis (2) derart steuert, daß der gegenwärtige Antennenauswahlbetrieb zu dem auf der Fehlerrate basierenden Antennenauswahlbetrieb geschaltet wird, wenn der auf der Signalstärke basierende Betrieb ausgewählt ist und die Signalstärke der digitalen Informationen niedriger als ein vorbestimmter Wert während einer Zeitperiode entsprechend einer von der Erfassungsvorrichtung (7) für die Bewegungsgeschwindigkeit erfaßten Geschwindigkeit gehalten wird und der gegenwärtige Antennenauswahlbetrieb zu dem auf der Signalstärke basierenden Antennenauswahlbetrieb geschaltet wird, wenn der auf der Fehlerrate basierende Betrieb ausgewählt ist und die Signalstärke der digitalen Informationen niedriger als ein vorbestimmter Wert während einer Zeitperiode entsprechend einer von der Erfassungsvorrichtung für die Bewegungsgeschwindigkeit erfaßten Geschwindigkeit gehalten wird.

11. Digitaler Informationsempfänger nach Anspruch 1, **dadurch gekennzeichnet, daß** der digitale Informationsempfänger weiterhin eine Vorrichtung zum Erfassen einer Bewegungsgeschwindigkeit des Fahrzeugs enthält, und daß die Steuervorrichtung den Antennenschalterkreis (2) derart steuert, daß der gegenwärtige Antennenauswahlbetrieb zu dem auf der Fehlerrate basierenden Antennenauswahlbetrieb geschaltet wird, wenn der auf der Signalstärke basierende Betrieb ausgewählt ist und die Signalstärke der digitalen Informationen niedriger als ein Wert entsprechend einer von der Erfassungsvorrichtung für die Bewegungsgeschwindigkeit erfaßten Geschwindigkeit während einer vorbestimmten Zeitperiode gehalten wird, und der gegenwärtige Antennenauswahlbetrieb zu dem auf der Signalstärke basierenden Antennenauswahlbetrieb geschaltet wird, wenn der auf der Fehlerrate basierende Betrieb ausgewählt ist und die Signalstärke der digitalen Informationen niedriger als ein Wert entsprechend einer von der Erfassungsvorrichtung (7) für die Bewegungsgeschwindigkeit erfaßten Geschwindigkeit während einer vorbestimmten Zeitperiode gehalten wird.

12. Digitaler Informationsempfänger nach Anspruch 1, **dadurch gekennzeichnet, daß** der digitale Informationsempfänger weiterhin eine Vorrichtung zum Erfassen einer Bewegungsgeschwindigkeit des Fahrzeugs enthält, und daß die Steuervorrichtung den Antennenschalterkreis (2) derart steuert, daß der gegenwärtige Antennenauswahlbetrieb zu dem auf der Fehlerrate basierenden Antennenauswahlbetrieb geschaltet wird, wenn der auf der Signalstärke basierende Betrieb ausgewählt ist und die Signalstärke der digitalen Informationen niedriger als ein Wert entsprechend einer von der Erfassungsvorrichtung (7) für die Bewegungsgeschwindigkeit während einer Zeitperiode entsprechend einer von der Erfassungsvorrichtung für die Bewegungsgeschwindigkeit erfaßten Geschwindigkeit gehalten wird und der gegenwärtige Antennenauswahlbetrieb zu dem auf der Signalstärke basierenden Antennenauswahlbetrieb geschaltet wird, wenn der auf der Fehlerrate basierende Betrieb ausgewählt ist und die Signalstärke der digitalen Informationen niedriger als ein Wert entsprechend einer von der Erfassungsvorrichtung für die Bewegungsgeschwindigkeit erfaßten Geschwindigkeit während einer Zeitperiode entsprechend einer von der Erfassungsvorrichtung für die Bewegungsgeschwindigkeit erfaßten Geschwindigkeit gehalten wird.

## Revendications

1. Récepteur d'informations numériques pour véhicule, comportant une pluralité d'antennes, un circuit de commutation des antennes (2) qui sélectionne une des antennes en fonction d'un signal d'instruction externe,
un moyen (30) pour effectuer le traitement à la réception d'un signal comprenant des informations numériques, reçu par l'antenne sélectionnée par le sélecteur d'antenne;
un moyen (60) de démodulation du signal reçu, ce qui permet ainsi de reproduire les informations numériques comprises dans le signal reçu;
un moyen (5) de détection du taux d'erreurs des informations numériques démodulées;
un moyen (90) de détection de la force de réception du signal reçu; et
un moyen (80) de commande du circuit de commutation des antennes (2) en envoyant le signal d'instruction externe de telle façon que la sélection d'une antenne se fasse sélectivement soit selon un mode de sélection en fonction de la force de réception des signaux selon lequel une antenne est sélectionnée quand elle reçoit un signal de la plus grande force de réception soit un mode de sélection d'une antenne en fonction du taux d'erreurs selon lequel une antenne est sélectionnée quand elle reçoit un signal du plus faible taux d'erreurs.

2. Récepteur d'informations numériques selon la revendication 1, **caractérisé en ce que** le récepteur d'informations numériques comporte en outre un moyen (7) de détection de la vitesse de déplacement du véhicule, et **en ce que** le moyen de commande pilote le circuit de commutation des antennes (2) de telle façon que l'on passe de l'antenne utilisée à une antenne recevant un signal de la force de réception la plus grande quand une vitesse de déplacement détectée par le moyen de détection de la vitesse de déplacement est supérieure à une valeur prédéterminée ou sinon, on passe de l'antenne utilisée à une antenne recevant un signal au taux d'erreurs le plus faible.

3. Récepteur d'informations numériques selon la revendication 1, **caractérisé en ce que** le récepteur d'informations numériques comporte en outre un dispositif d'entrée pour permettre à un utilisateur d'entrer une instruction indiquant quel mode doit être utilisé entre le mode de sélection d'une antenne en fonction de la force de réception des signaux et le mode de sélection d'une antenne en fonction du taux d'erreurs, et **en ce que** le moyen de commande pilote le circuit de commutation des antennes (2) de telle façon qu'une antenne soit sélectionnée selon un mode entré par l'intermédiaire du dispositif d'entrée.

4. Récepteur d'informations numériques selon la revendication 1, **caractérisé en ce que** le récepteur d'informations numériques comporte en outre un moyen de détection d'une position actuelle du véhicule sur une carte, et **en ce que** le moyen de commande pilote le circuit de commutation des antennes (2) de telle façon qu'une antenne soit sélectionnée selon le mode de sélection en fonction du taux d'erreurs quand la position actuelle détectée est en zone urbaine et une antenne soit sélectionnée selon le mode de sélection en fonction de la force du signal quand la position actuelle détectée est en zone rurale ou sur autoroute.

5. Récepteur d'informations numériques selon la revendication 1, **caractérisé en ce que** le moyen de commande pilote le circuit de commutation des antennes (2) de telle façon que le mode de sélection d'une antenne en cours passe au mode de sélection d'une antenne en fonction du taux d'erreurs quand le mode de sélection en fonction de la force de réception des signaux est sélectionné et que le taux d'erreurs des informations numériques est maintenu supérieur à une valeur prédéterminée pendant une durée prédéterminée et le mode de sélection d'une antenne en cours passe au mode de sélection d'une antenne en fonction de la force de réception des signaux quand le mode de sélection en fonction du taux d'erreurs est sélectionné et que le taux d'erreurs des informations numériques est maintenu supérieur à une valeur prédéterminée pendant une durée prédéterminée.

6. Récepteur d'informations numériques selon la revendication 1, **caractérisé en ce que** le récepteur d'informations numériques comprend en outre un moyen de détection d'une vitesse de déplacement du véhicule et **en ce que** le moyen de commande pilote le circuit de commutation des antennes (2) de telle façon que le mode de sélection d'une antenne en cours passe au mode de sélection d'une antenne en fonction du taux d'erreurs quand le mode de sélection en fonction de la force de réception des signaux est sélectionné et que le taux d'erreurs des informations numériques est maintenu supérieur à une valeur prédéterminée pendant une durée correspondant à une vitesse détectée par le moyen de détection de la vitesse de déplacement (7) et le mode de sélection d'une antenne en cours passe au mode de sélection d'une antenne en fonction de la force de réception des signaux quand le mode de sélection en fonction du taux d'erreurs est sélectionné et que le taux d'erreurs des informations numériques est maintenu supérieur à une valeur prédéterminée pendant une durée correspondant à une vitesse détectée par le moyen de détection de la vitesse de déplacement.

7. Récepteur d'informations numériques selon la revendication 1, **caractérisé en ce que** le récepteur d'informations numériques comprend en outre un moyen de détection d'une vitesse de déplacement du véhicule, et **en ce que** le moyen de commande pilote le circuit de commutation des antennes (2) de telle façon que le mode de sélection d'une antenne en cours passe au mode de sélection d'une antenne en fonction du taux d'erreurs quand le mode de sélection en fonction de la force de réception des signaux est sélectionné et que le taux d'erreurs des informations numériques est maintenu supérieur à une valeur correspondant à une vitesse détectée par le moyen de détection de la vitesse de déplacement (7) pendant une durée déterminée et le mode de sélection d'une antenne en cours passe au mode de sélection d'une antenne en fonction de la force de réception des signaux quand le mode de sélection en fonction du taux d'erreurs est sélectionné et que le taux d'erreurs des informations numériques est maintenu supérieur à une valeur correspondant à une vitesse détectée par le moyen de détection de la vitesse de déplacement pendant une durée prédéterminée.

8. Récepteur d'informations numériques selon la revendication 1, **caractérisé en ce que** le récepteur d'informations numériques comprend en outre un moyen de détection d'une vitesse de déplacement du véhicule, et **en ce que** le moyen de commande pilote le circuit de commutation des antennes (2) de telle façon que le mode de sélection d'une antenne en cours passe au mode de sélection d'une antenne en fonction du taux d'erreurs quand le mode de sélection en fonction de la force de réception des signaux est sélectionné et que le taux d'erreurs des informations numériques est maintenu supérieur à une valeur correspondant à une vitesse détectée par le moyen de détection de la vitesse de déplacement (7) pendant une durée correspondant à une vitesse détectée par le moyen de détection de la vitesse de déplacement et le mode de sélection d'une antenne en cours passe au mode de sélection d'une antenne en fonction de la force de réception des signaux quand le mode de sélection en fonction du taux d'erreurs est sélectionné et que le taux d'erreurs des informations numériques est maintenu supérieur à une valeur correspondant à une vitesse détectée par le moyen de détection de la vitesse de déplacement, pendant une durée correspondant à une vitesse détectée par le moyen de détection de la vitesse de déplacement.

9. Récepteur d'informations numériques selon la revendication 1, **caractérisé en ce que** le moyen de commande pilote le circuit de commutation des antennes (2) de telle façon que le mode de sélection d'un antenne en cours passe au mode de sélection d'une antenne en fonction du taux d'erreurs quand le mode de sélection en fonction de la force de réception des signaux est sélectionné et que la force de réception des signaux d'informations numériques est maintenue inférieure à une valeur prédéterminée pendant une durée prédéterminée et le mode de sélection d'une antenne en cours passe au mode de sélection d'une antenne en fonction de la force de réception des signaux quand le mode de sélection en fonction du taux d'erreurs est sélectionné et que la force de réception des signaux d'informations numériques est maintenue inférieure à une valeur prédétermine pendant une durée prédéterminée.

10. Récepteur d'informations numériques selon la revendication 1, **caractérisé en ce que** le récepteur d'informations numériques comprend en outre un moyen de détection d'une vitesse de déplacement du véhicule, et **en ce que** le moyen de commande pilote le circuit de commutation des antennes (2) de telle façon que le mode de sélection d'une antenne en cours passe au mode de sélection d'une antenne en fonction du taux d'erreurs quand le mode de sélection en fonction de la force de réception des signaux est sélectionné et que la force de réception des signaux d'informations numériques est maintenue inférieure à une valeur prédéterminée pendant une durée correspondant à une vitesse détectée par le moyen de détection de la vitesse de déplacement (7) et le mode de sélection d'une antenne en cours passe au mode de sélection d'une antenne en fonction de la force de réception des signaux quand le mode de sélection en fonction du taux d'erreurs est sélectionné et que la force de réception des signaux d'informations numériques est maintenue inférieure à une valeur prédéterminée pendant une durée correspondant à une vitesse détectée par le moyen de détection de la vitesse de déplacement.

11. Récepteur d'informations numériques selon la revendication 1, **caractérisé en ce que** le récepteur d'informations numériques comprend en outre un moyen de détection de la vitesse de déplacement du véhicule, et **en ce que** le moyen de commande pilote le circuit de commutation des antennes (2) de telle façon que le mode de sélection d'un antenne en cours passe au mode de sélection d'une antenne en fonction du taux d'erreurs quand le mode de sélection en fonction de la force de réception des signaux est sélectionné et que la force de réception des signaux d'informations numériques est maintenue inférieure à une valeur correspondant à une vitesse détectée par le moyen de détection de la vitesse de déplacement pendant une durée prédéterminée et le mode de sélection d'une antenne en cours passe au mode de sélection d'une antenne en fonction de la force de réception des signaux quand le mode de sélection en fonction du taux d'erreurs est sélectionné et que la force de réception des signaux d'informations numériques est maintenue inférieure à une valeur correspondant à une vitesse détectée par le moyen de détection de la vitesse de déplacement (7) pendant une durée prédéterminée.

12. Récepteur d'informations numériques selon la revendication 1, **caractérisé en ce que** le récepteur d'informations numériques comprend en outre un moyen de détection d'une vitesse de déplacement du véhicule ,et **en ce que** le moyen de commande pilote le circuit de commutation des antennes (2) de telle façon que le mode de sélection d'une antenne en cours passe au mode de sélection d'une antenne en fonction du taux d'erreurs quand le mode de sélection en fonction de la force de réception des signaux est sélectionné et que la force de réception des signaux d'informations numériques est maintenue inférieure à une valeur correspondant à un vitesse détectée par le moyen de détection de la vitesse de déplacement pour une durée correspondant à une vitesse détectée par le moyen de détection de la vitesse de déplacement et le mode de sélection d'une antenne en cours passe au mode de sélection d'une antenne en fonction de la force de réception des signaux quand le mode de sélection en fonction du taux d'erreurs est sélectionné et que la force de réception des signaux d'informations numériques est maintenue inférieure à une valeur correspondant à une vitesse détectée par le moyen de détection de la vitesse de déplacement pour une durée correspondant à une vitesse détectée par le moyen de détection de la vitesse de déplacement.
